# EUROPÄISCHE PATENTSCHRIFT

(11) **EP 3 218 552 B1**
(45) Veröffentlichungstag und Bekanntmachung des Hinweises auf die Patenterteilung: **11.07.2018**
(21) Anmeldenummer: 15797589.7
(22) Anmeldetag: 04.11.2015
(51) Int. Cl.: E04F 13/08, E04B 2/96, G01M 3/00, E04B 1/76, E04F 13/07, E04B 1/80

(54) **FASSADENSYSTEM ZUR RENOVIERUNG VON ALTBAUTEN MIT FEUERFESTEN FASSADENELEMENTEN HOHER WÄRME-DÄMMWIRKUNG BEI UNEBENEM UNTERGRUND DER GEBÄUDEWAND UND VERFAHREN ZU DESSEN HERSTELLUNG**
FAÇADE SYSTEM FOR BUILDING RENOVATION, WITH FIREPROOF ELEMENTS AND INSULATION, SUITABLE FOR UNREGULAR SUBSTRATE AND A METHOD FOR CLADDING
SYSTEME DE FAÇADE POUR LA RENOVATION DES BATIMENTS ANCIENS AVEC ISOLATION THERMIQUE ET ELEMENTS COUPE-FEU POUR LES SURFACES IRREGULIERES ET PROCEDE D'INSTALLATION

(30) Priorität: 13.11.2014 DE 102014016709
(43) Veröffentlichungstag der Anmeldung: 20.09.2017
(73) Patentinhaber: FKN Fassaden GmbH & Co. KG, 74632 Neuenstein (DE)
(72) Erfinder: EBERT, Franz, 74597 Stimpfach (DE); MACK, Hans-Ulrich, 74081 Heibronn-Sontheim (DE)
(74) Vertreter: Kindermann, Peter
(86) Internationale Anmeldenummer: PCT/DE2015/000532
(87) Internationale Veröffentlichungsnummer: WO 2016/074658

(56) Entgegenhaltungen:
- EP-A2- 1 308 570
- EP-A2- 1 734 195
- WO-A1-2012/017903
- WO-A1-2012/041331
- WO-A2-2013/148843
- DE-A1- 3 519 752
- DE-A1- 10 225 167
- DE-U1- 20 114 949
- DE-U1-202013 005 599

## Beschreibung

Die Erfindung betrifft ein Fassadensystem zur Renovierung von Altbauten mit nicht brennbaren Fassadenelementen hoher Wärme-Dämmwirkung bei unebenem Untergrund der Gebäudewand und ein Verfahren zu dessen Herstellung.

Bundesregierung und Bauherren sind Anhänger der Fassadendämmung.
Doch einige der häufig verarbeiteten Materialien sind offenbar, im wahrsten Sinn des Wortes, brandgefährlich und gesundheitsschädlich. So hat ein diesbezüglicher Artikel in einem bekannten Nachrichten-Magazin jüngst für Aufsehen gesorgt. Hier wurde drastisch auf die lange nicht bekannte Gefährlichkeit von Dämmsystemen auf der Basis von Styropor und Phenolharz hingewiesen (Der Spiegel, Nr. 26, 2012, Glutheiße Seen).
Die mit den zunehmenden Anforderungen an die Gebäude-Wärmedämmung benötigten Dicken von Dämmstoffen steigern außerdem die Nachfrage nach effizienteren Materialien und Systemen zur Gebäudedämmung.
Eine mögliche Abhilfe bietet hierbei die Isolation mit mikroporösen Dämmstoffen. Ein mikroporöser Dämmstoff wird unter anderen aus pyrogener Kieselsäure, meist in Verbindung mit einem Stabilisator, hergestellt. Die Porengrößen dieser Dämmstoffe sind im Nanobereich und damit kleiner als die mittlere freie Weglänge der Luftmoleküle. Dies bewirkt unter anderem die ausgezeichneten Dämmeigenschaften gegen Wärmeverlust. Mikroporöse Kieselsäure besitzt eine extrem niedrige Wärmeleitfähigkeit, die sich insbesondere bei hohen Temperaturen nur wenig erhöht. Mikroporöse Kieselsäure besitzt eine hohe thermische Stabilität, ist nicht brennbar und ist chemisch resistent gegen Säuren, Alkalien und Abgase. Mikroporöse Kieselsäure ist frei von organischen Bindemitteln. Es ergeben sich bei der Dämmung mittels Werkstoffen aus mikroporöser Kieselsäure im Wesentlichen die folgenden Vorteile:
a) Bei geringerer Dämmstoffdicke als bei herkömmlicher Dämmung besteht eine vielfach geringere Wärmeleitung.
b) Die Lebensdauer dieses Dämm-Materials liegt bei ca.50 Jahren
c) Weiter zeigt ein Wärmeleitfähigkeit-Vergleich
   Mikroporöser Dämmstoff = 0,019 W/mK
   Polystyrolschaum = 0,04 W/mK
   Glaswolle = 0,035 - 0,045 W/mK
d) Es sind auch geringe Dämmstärken ab 1 cm möglich.

Zum Stand der Technik wird auf folgende Druckschriften verwiesen:
In der WO 2012 / 041 823 A1 ist ein mikroporöser, mit Organosilanen hydrophobierter Wärmedämmformkörper mit hydrophiler Oberfläche beschrieben. Die Zielsetzung dieses Dokuments ist es, einen mikroporösen, vorwiegend diffusionsoffenen und hydrophoben Wärmedämmformkörper mit verbesserten mechanischen Eigenschaften bereitzustellen, der es erlaubt, weitere Schichten auf wasserhaltiger Basis dauerhaft aufzubringen.
Im Anspruch 1 dieser Druckschrift wird deshalb ein mikroporöser, mit Organosilanen hydrophobierter Wärmeformkörper beansprucht, dessen Oberfläche
a) teilweise oder vollständig fest mit einer offenporigen, hydrophilen Schicht oder
b) teilweise fest mit einer offenporigen, hydrophilen Schicht oder
c) teilweise fest mit einer offenporigen, hydrophilen Schicht und
teilweise fest mit einer nicht offenporigen, hydrophilen Schicht
verklebt ist.

Aus der EP 1 436 471 B1 sind Paneele mit einem Vakuumelement für Außenwandkonstruktionen bekannt, denen die Zielsetzung zugrunde liegt, praxisverwertbare, weniger empfindliche Paneele mit einem möglichst einfachen Aufbau zu schaffen, die für einen besseren Schallschutz und eine bessere Wärmedämmung sorgen.
Diese Zielsetzung wird erreicht durch einen Paneelaufbau für Wandkonstruktionen, der in Form eines Bauteils zwischen Rahmenprofilelementen anbringbar ist, umfassend mindestens ein Vakuum - Isolationspaneel und ein Dämmelement, wobei das Vakuum - Isolationspaneel und das Dämmelement zwischen einer äußeren Abdeckung und einer inneren Abdeckung angeordnet sind,
dadurch gekennzeichnet, dass
der Paneelaufbau weiterhin druckfeste Abstandshalter umfasst die zwischen dem mindestens einen Vakuum-Isolationspaneel und der an dem Dämmelement angrenzenden äußeren Abdeckung und/oder zwischen innerer Abdeckung und äußerer Abdeckung angeordnet und vorzugsweise mit diesen verklebt sind, und sich das Vakuum - Isolationspaneel mit seiner nach der inneren Abdeckung gerichteten Fläche näher zur inneren Abdeckung befindet als das Dämmelement mit seiner nach dieser inneren Abdeckung gerichteten Fläche.

Im Wesentlichen ist hier die Schichtung eines Dämmelements und eines Vakuum-Isolationspaneels unter Verwendung von Abstandshaltern beansprucht.

Aus der Druckschrift DE 102 25 167 A1 ist ein Wandaufbau für Gebäudeaußenwände bekannt, wobei ein Vakuumdämmpaneel und eine die Stabilität des Wandaufbaus bestimmende Tragschicht verwendet wird.

Die Druckschrift EP 1 308 570 A2 offenbart ein Verfahren zum Vakuum-Fügen von Vakuumbehältnissen und Strukturen.

Ferner ist aus der WO 2012/017903 A1 ein thermisch isolierendes Vakuumpaneel bekannt, welches mit Sensoren bestückt ist, um beispielsweise eine Temperatur, eine Luftfeuchtigkeit oder eine Beschleunigung zu erfassen.

Weiterhin beschreibt die Druckschrift DE 201 14 949 U1 ein feuerwiderstandsfähiges Profilbauteil zur Herstellung von Wandelementen oder Fassaden, wobei Hohlkammern mit einer Brandschutzisoliermasse ausgefüllt sind.

Aus der Druckschrift WO 2012/041331 A1 ist ein modulares und hochfestes Sandwich-Paneel bekannt, wobei ein Betonteil mit teilweise integriertem Isolierteil verwendet wird.

Die Druckschrift DE 35 19 752 A1 offenbart eine aus Mineralfaser bestehende Dämmplatte, welche eine druckverteilende Deckschicht aufweist.

Weiterhin sind aus der WO 2013/148843 A2 geopolymer precursor-aerogel Gemische bekannt, die Aerogel-Additive aufweisen.

Aus der den Oberbegriff des Patentanspruchs 1 bildenden Druckschrift EP 1 734 195 A2 ist ferner ein Fassadensystem zur Renovierung von Altbauten mit nicht brennbaren Fassadenelementen hoher Wärme-Dämmwirkung bei unebenem Untergrund der Gebäudewand bekannt, bei dem ein Fassadenelement eine Dämmung mit einer 3-stufigen Schichtung aus einer äußeren Dämmplatte aus hydrophober Kieselsäure und einer inneren Dämmplatte aus hydrophober Kieselsäure aufweist, wobei zwischen diesen Platten eine Vakuum-Isolierplatte gelagert ist, die aus hydrophober Kieselsäure besteht und die Vakuum-Isolierplatte luftdicht mit Plastikfolie umhüllt und evakuiert wurde, wobei jedes Fassadenelement mittels mechanischen Verbindungselementen auf dem bauseitigen Mauerwerk befestigt ist, und das Fassadenelement einen Randverbund in der Form eines Spezialdämmstoffes aufweist. Die Vakuum-Isolierplatte ist hierbei mit einem zusätzlichen umlaufenden Dichtstreifen aus diesem Material versehen, und eine vorgehängte Fassade besteht aus Sichtelementen, die mittels eines thermischen Trennelements über Trägerpfosten an der bauseitigen Wandfläche befestigt sind.

Aus der den Oberbegriff des Patentanspruchs 5 bildenden Druckschrift DE 20 2013 005599 U1 ist ein Verfahren zur Schaffung eines Fassadensystems zur Renovierung von Altbauten mit nicht brennbaren Fassadenelementen hoher Wärme-Dämmwirkung bei unebenem Untergrund der Gebäudewand bekannt, bei dem ein bestehendes Fassadensystem zur Aufnahme eines verbesserten Fassadensystems dadurch vorbereitet wird, dass das Mauerwerk soweit als möglich von Unebenheiten gereinigt wird, und bei dem ein Fassadenelement bereit gestellt wird mit einer Dämmung bestehend aus einer 3-stufigen Schichtung aus einer äußeren Dämmplatte aus hydrophober Kieselsäure und einer inneren Dämmplatte aus hydrophober Kieselsäure, wobei zwischen diesen Platten eine Vakuum-Isolierplatte gelagert ist, die aus hydrophober Kieselsäure besteht, die luftdicht mit Plastikfolie umhüllt und evakuiert wurde. Hierbei ist die äußere Dämmplatte (14) mit einer äußeren Deckplatte belegt und das Fassadenelement ringsum mit einem Randverbund versehen. Das Fassadenelement wird ferner am Mauerwerk befestigt und mit einer Fassade aus Fassadenelementen mittels Trägerpfosten über thermische Trennelemente am Mauerwerk befestigt.

Der vorliegenden Erfindung liegt die Aufgabe zugrunde, ein Fassadensystem zur Renovierung von Altbauten und ein Verfahren zu dessen Herstellung bereit zu stellen, wobei ein erhöhter Brandschutz gleichzeitig mit einem verbesserten Feuchteschutz realisierbar ist. Weiterhin soll sichergestellt sein, dass sich das Fassadensystem der Oberfläche des bestehenden Baukörpers fugenlos anpasst und ein erhöhter Schallschutz sowie eine erhöhte Wärmedämmung gewährleistet ist.

Diese Aufgabe wird hinsichtlich des Fassadensystems durch die Merkmale des Patentanspruchs 1 und hinsichtlich des Verfahrens durch die Maßnahmen des Patentanspruchs 5 gelöst.

In den Unteransprüchen sind weitere vorteilhafte Ausgestaltungen der Erfindung gekennzeichnet.

Die erfindungsgemäße Vorrichtung wird im Folgenden näher beschrieben.

Es zeigen im Einzelnen:
Fig.1: eine Außenansicht eines erfindungsgemäßen Fassadensystems;
Fiq.2: eine Schnitt - Darstellung der Fassadenstruktur nach Fig.1;
Fig.3: einen Schnitt durch ein erfindungsgemäßes Fassadenelement 3;
Fig.4: eine detaillierte Schnitt - Darstellung einer Fassadenstruktur nach Fig.2;
Fig.5: eine detaillierte Schnittdarstellung eines Fassadenelements nach Fig.4;
Fig.6: einen beispielhaften Fassaden-Aufbau;
Fig.7: einen weiteren beispielhaften Fassaden-Aufbau; und
Fig.8: einen nochmaligen beispielhaften Fassaden-Aufbau.

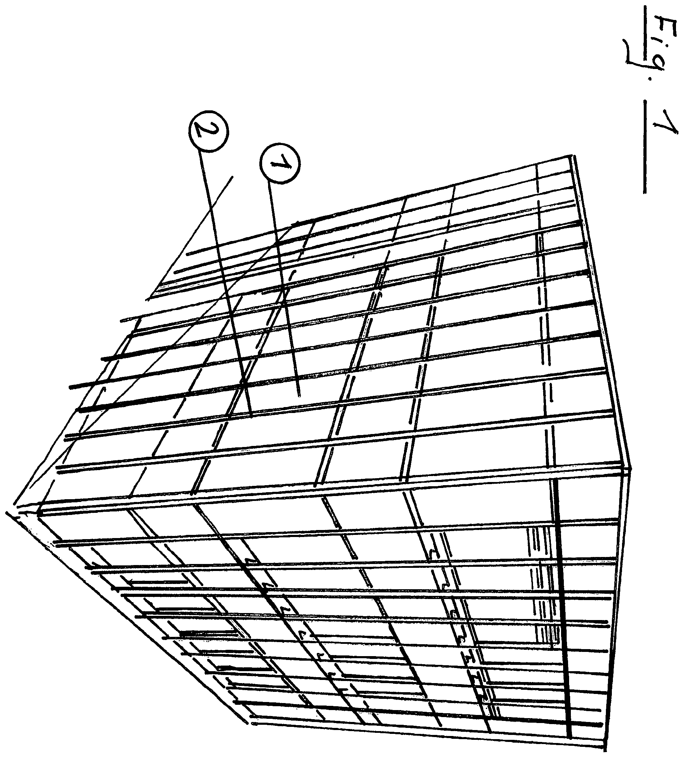

Die Fig.1 zeigt eine Außenansicht eines erfindungsgemäßen Fassadensystems zum Beispiel bei einem Hochhaus.
Hier ist die Gestaltung einer Hochhaus-Fassade dargestellt. Mit 1 ist ein jeweils vorgehängtes Sichtelement bezeichnet und mit dem Bezugszeichen 2 ist die Lage eines der verwendeten Trägerpfosten markiert.

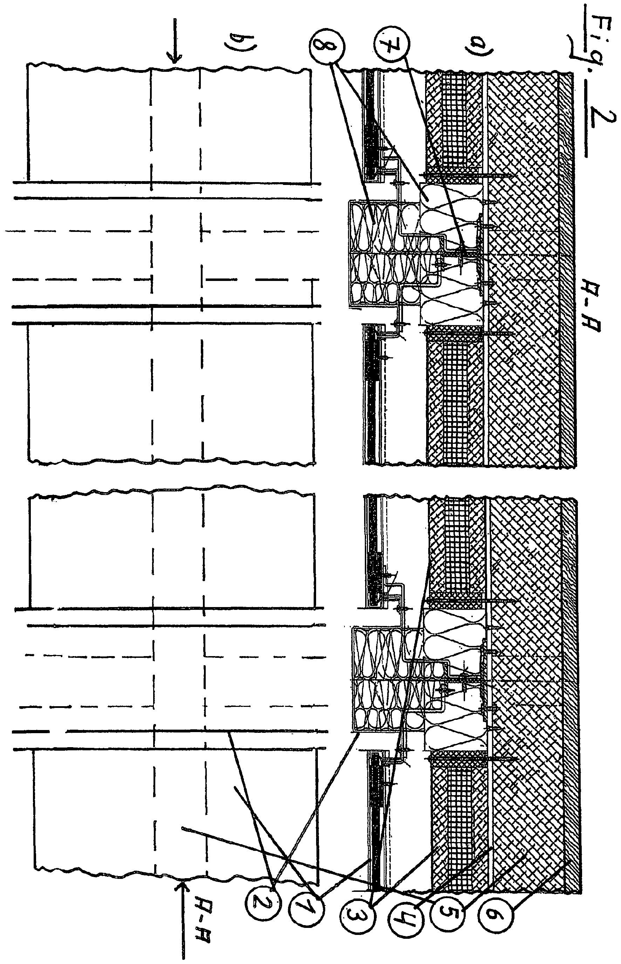

Die Fig.2 zeigt eine Schnitt-Darstellung der Fassadenstruktur nach Fig.1.
Hier sind im oberen Teil a) der Fig.2 zwei nebeneinander liegende Trägerpfosten 2 im Schnitt A - A mit den jeweils angrenzenden vorgehängten Sichtelementen im Querschnitt dargestellt. Im darunter gezeigten Teil b) der Fig.2 sind die Strukturen der Sichtelemente 1 und der zugehörigen Trägerpfosten 2 in der Vorderansicht zu sehen. Die hier dargestellten Fassadenelemente 3 sind, unter Zwischenlage einer Trägerplatte 4 (Zum Beispiel: Rigips, Faserplatte, Gasbeton) auf einer Quertraverse 5 befestigt, die wiederum auf einer Trägerplatte 6 des grundlegenden Wandaufbaus, quasi als innere Trägerplatte, Halt finden. Aus der Fig.2 ist zu erkennen, dass die Trägerpfosten 2 über jeweils ein thermisches Trennelement 7 ebenfalls auf einer Quertraverse 5 befestigt sind. Die Hohlräume in den gezeigten Trägerpfosten 2 und die Zwischenräume zwischen den Fassadenelementen 3 sind mit nicht brennbarem Füllstoff, vorzugsweise hydrophober Kieselsäure, verfüllt.

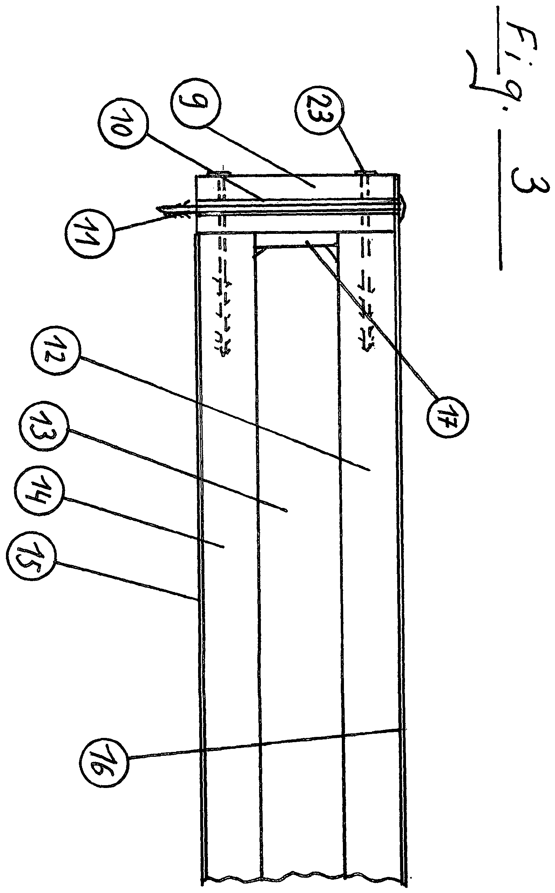

Die Fig.3 zeigt einen Schnitt durch ein erfindungsgemäßes Fassadenelement 3. Wie aus der Lage des mechanischen Verbindungselements 11, beispielsweise eine in einer Hülle 10 aus Edelstahl geführte Schraube, zu ersehen ist, ist eine, oben dargestellte, äußere Dämmplatte 12 von einer Deckplatte 16 aus Aluminium bedeckt, wobei die Deckplatte 16 der Schalldämmung dient. Diese Dämmplatte 12 ist aus einer hydrophoben Kieselsäure mit relativ hoher Dichte hergestellt. Hierauf folgt eine Vakuum -Isolierplatte 13, der wiederum eine innere Dämmplatte 14 aus hydrophober Kieselsäure mit relativ niedriger Dichte folgt, die von einem Gewebe aus Glasfaser - Werkstoff bedeckt ist. Dies betrifft eine besondere Bauform. Es können auch beide Dämmplatten 12 und 14 denselben Dichtegrad aufweisen.
Die Vakuum - Isolierplatte 13 besteht als Sonderbauform ebenfalls aus hydrophober Kieselsäure die mit einer Metall - beschichteten Plastikfolie umgeben und dann evakuiert wurde. Hierzu kann auch nicht hydrophobe Kieselsäure verwendet werden. Diese drei Platten 12, 13 und 14 können miteinander verklebt sein.
Der Randverbund 9 des gezeigten Fassadenelements ist ringsum mit einem Randverbund aus Calciumsilikat eingefasst. Hierbei handelt es sich um einen hochwertigen leichten Spezialdämmstoff auf der Basis von Erdalkalisilikat zur Verwendung in Brandschutzkonstruktionen mit einer Temperaturbeständigkeit bis zu 1100 Grad Celsius. Entsprechende Klebebänder sind auf Polyurethanschaum elastisch und verklebbar. Zusätzlich kann, wie in der Fig.3 gezeigt, der Zusammenhalt des Verbunds aus den Platten 12,13 und 14 dadurch gefördert werden, dass spezielle, stiftähnliche, Verbindungselemente 23 den Randverbund 9 mit den Platten 12 und 14 verbinden.

Im Randbereich der Vakuum - Isolierplatte 13 ist zusätzlich umlaufend zum Brandschutz ein Streifen17 aus Calciumsilikat vorgesehen. Dieser Streifen 17 ist mit einer Chemikalie getränkt die bei Hitzeweinwirkung ein unschädliches Gas entweichen lässt, somit diesen Bereich aufschäumen lässt und den Zusammenhalt des Plattenverbunds zusätzlich gewährleistet. Die Produkte 9 und 17 können als Erzeugnisse der Fa. Promat erworben werden.
Anstelle des Dämmstoffes der hydrophoben Kieselsäure kann auch Aerogel oder Graphengel oder ein anderer mineralischer Dämmstoff verwendet werden.

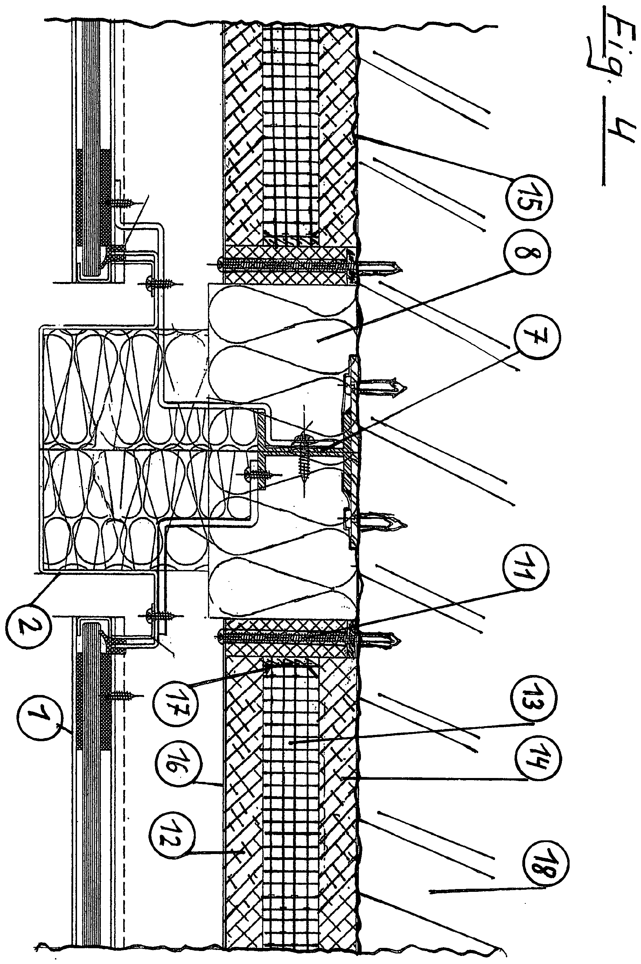

Die Fig.4 zeigt eine detaillierte Schnitt - Darstellung einer Fassadenstruktur nach Fig.2.
In diesem Beispiel ist das erfindungsgemäße Fassadenelement direkt auf Mauerwerk 18, zum Beispiel Ziegel oder Beton, aufgebracht.
Es sind hier dieselben Bezugszeichen wie in der Fig. 2 und der Fig.3 verwendet. Besonders hervorzuheben ist hierbei, dass durch die Auflage der inneren Dämmplatte 14 und der Zwischenlage eines Gewebes aus Glasfaser - Werkstoff eine innige Verbindung zwischen dem Fassadenelement und dem Mauerwerk 18 ergibt. Hierdurch wird eine Luftfeuchtigkeit eintragende Luftzirkulation zwischen dem Fassadenelement und dem Mauerwerk 18 vermieden.

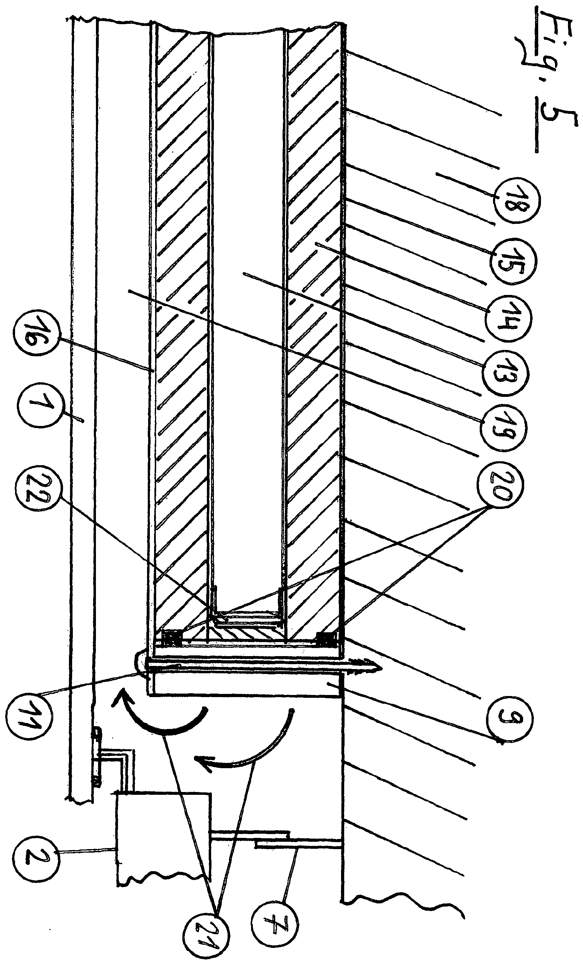

Die Fig.5 zeigt eine detaillierte Schnittdarstellung eines Fassadenelements nach Fig.4. Im Zentrum dieser Darstellung sind die äußere Dämmplatte 12, bestehend aus hydrophober Kieselsäure hoher Dichte, die Vakuum - Isolierplatte 13 und die innere Dämmplatte 14, bestehend aus hydrophober Kieselsäure niedriger Dichte, zu sehen. Als Zwischenlage zu einem bauseitigen Mauerwerk 18, zum Beispiel aus Beton oder Ziegeln, dient ein Gewebe aus Glasfaser - Werkstoff. Dieser Verbund gewährleistet eine weitgehend, von Luftzirkulation freie, Verbindung zwischen dem erfindungsgemäßen Fassadenelement und dem zu isolierenden Mauerwerk 18. Zwischen diesem Fassadenelement, das beispielsweise mittels eines Verbindungselements 11 befestigt wird, und einem vorgehängten Sichtelement 1 befindet sich ein Luftraum 19 in der Fassadenstruktur. Das gezeigte Sichtelement 1 ist in der gezeigten Darstellung an einem Trägerpfosten 2 befestigt, wobei dieser Trägerpfosten 2 mittels eines thermischen Trennelements am Mauerwerk 18 seinen Halt findet. Der in der Fig.2 gezeigte dämmende Füllstoff 8 wurde in der Fig.5 aus Gründen der Übersicht weggelassen. Der, in der Fig.3 schon beschriebene, Randverbund 9 ist nicht nur brandsicher sondern auch diffusionsoffen. Zur Unterstützung dieser Dampfdiffusions - Fähigkeit kann der Randverbund 9 mit Löchern versehen sein. Der Austritt von Wasserdampf ist in der Fig.5 mit den beiden Pfeilen 21 bezeichnet. Zur Überwachung des Zustands der beiden Dämmplatten 12 und 14 dient jeweils mindestens ein Feuchtesensor 20. Die gezeigten Feuchtesensoren 20 sind lediglich beispielhaft an der gezeigten Stelle eingezeichnet. Diese Feuchtesensoren 20 stehen, jeweils entsprechend den vorliegenden bauseitigen und klimatischen Bedingungen, für ein ganzes System solcher Überwachungselemente. Eine entsprechende bauseitige Aufbereitung und Darstellung der jeweils erfassten Messwerte sind einem Fachmann geläufig. Zur Überwachung der Funktionsfähigkeit der gezeigten Vakuum - Isolierplatte 13 dient ein, ebenfalls beispielhaft gezeigter, Vakuum - Sensor 22. Zur Erfassung und Weiterverarbeitung entsprechender Messwerte gilt dasselbe wie zu den Feuchtesensoren 20 Gesagte. Als Vakuum - Sensor kann zum Beispiel als preiswerte Lösung die Dicke einer Vakuum - Isolierplatte (13) mittels entsprechender Dehnungs - Messstreifen erfasst werden.
Die, der äußeren Dämmplatte 12 vorgeschaltete Deckplatte 16 kann zur Geräuschdämmung aus Aluminium oder Stahl sein.
Anstelle der Materialien Aluminium oder Stahl kann die Deckplatte 16 auch aus einer Verbundplatte aus Mineralien und Plexiglas sein.
Das erfindungsgemäße Fassadesystem weist eine geringe Dicke des Dämmstoffs, bestehend aus den Platten 12,13 und 14 von ungefähr 70 mm auf und ist deshalb in vielen Fällen zur Renovierung gut geeignet.
Der Dämmwert der Vakuum Isolierplatte 13 beträgt 0,005 W/mK, der einer normalen Dämmplatte beträgt 0,020 W/mK.

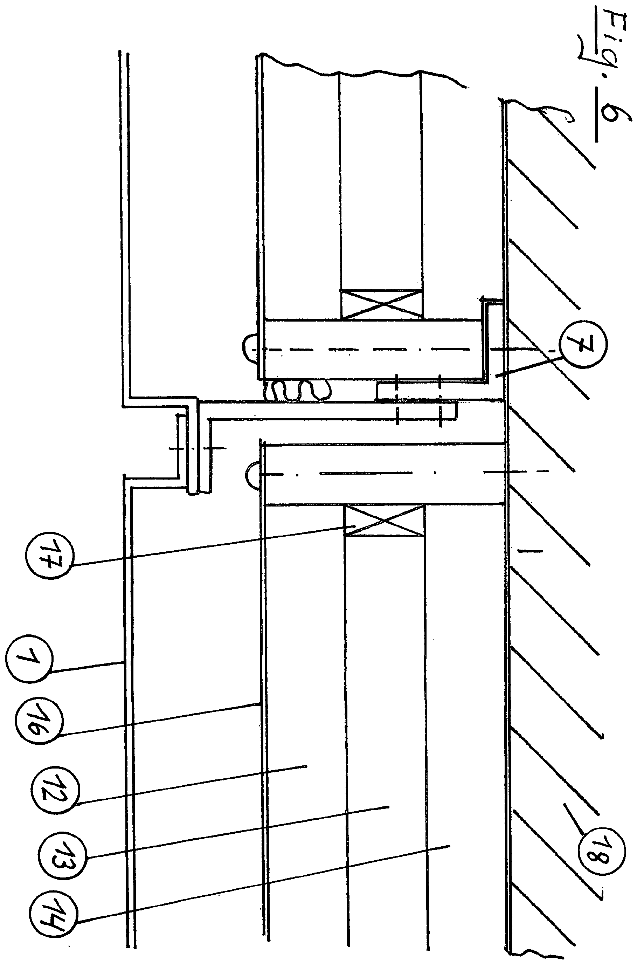

Die Fig.6 zeigt einen beispielhaften Fassaden - Aufbau.
Hier ist der Zwischenraum zwischen dem thermischen Trennelement 7 und den angrenzenden Fassadenelementen so gering gehalten, dass als Folge davon der Zwischenraum zwischen den vorgehängten Sichtelementen 1 minimal wird.

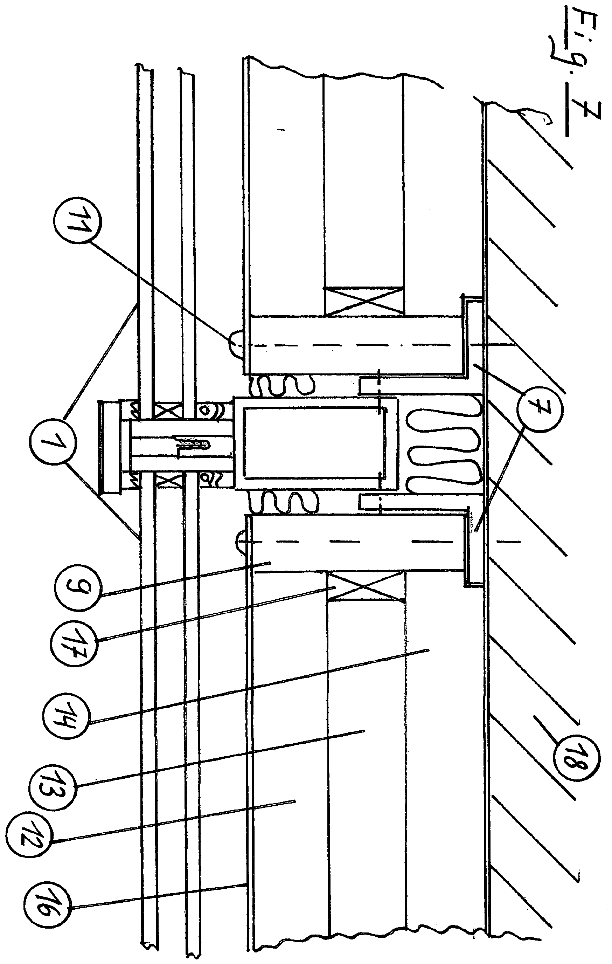

Die Fig.7 zeigt einen weiteren beispielhaften Fassaden - Aufbau.

Hier ist der Zwischenraum zwischen dem thermischen Trennelement 7 und den angrenzenden Fassadenelementen zwar ebenfalls gering, jedoch sind die thermischen Trennelemente 7 doppelt an der Wandfläche 18
befestigt um gewichtsmäßig schwere Sichtelemente 1 besser tragen zu können.

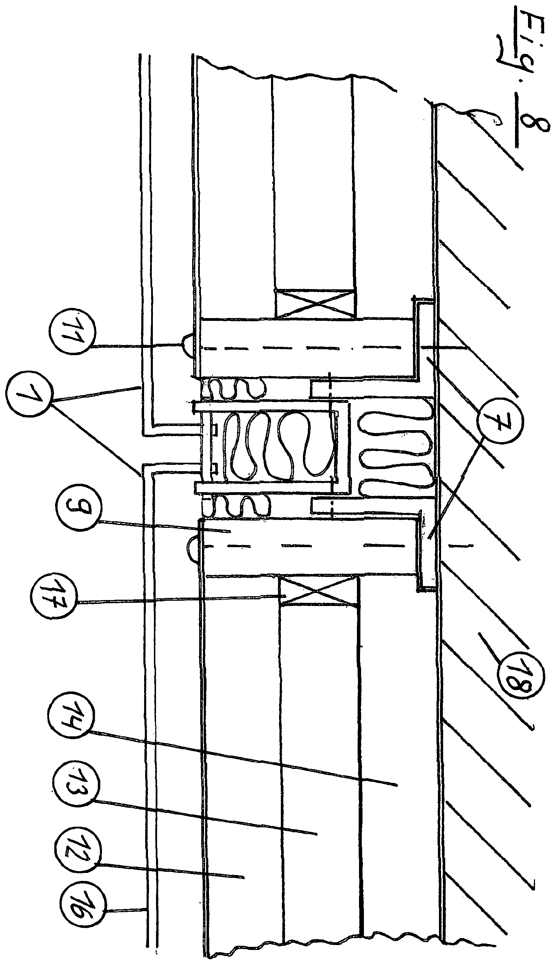

Die Fig.8 zeigt einen nochmaligen beispielhaften Fassaden - Aufbau.
Dieser Aufbau vereinigt hinsichtlich der mechanischen Befestigung der Fassadenelemente 1 die beiden Aufbauten aus Fig.6 und Fig.7.

### Bezugszeichenliste

- 1: vorgehängtes Sichtelement
- 2: Trägerpfosten zur Halterung der Sichtelemente
- 3: erfindungsgemäßes Fassadenelement
- 4: Trägerplatte (Rigips, Faserplatte, Gasbeton)
- 5: Quertraverse
- 6: Trägerplatte des grundlegenden Wandaufbaus
- 7: thermisches Trennelement
- 8: Füllstoff
- 9: Randverbund eines Fassadenelements (Promat)
- 10: Hülse aus Edelstahl
- 11: mechanisches Verbindungselement
- 12: äußere Dämmplatte aus hydrophober Kieselsäure (hohe Dichte)
- 13: Vakuum - Isolierplatte VIP
- 14: innere Dämmplatte aus hydrophober Kieselsäure (niedrige Dichte)
- 15: Gewebe aus Glasfaser - Werkstoff
- 16: Deckplatte aus Metall oder einem Mineral - Plexiglasverbund
- 17: Brandsicherung in der Form eines Streifens aus Calciumsilikat
- 18: Mauerwerk, Wandfläche, Beton, Gasbeton, Holz
- 19: Luftraum zwischen einem Sichtelement 1 und einer Deckplatte 16
- 20: Feuchtesensor
- 21: Dampfaustritt
- 22: Vakuumsensor
- 23: Verbindungselement

## Patentansprüche

1. Fassadensystem zur Renovierung von Altbauten mit nicht brennbaren Fassadenelementen hoher Wärme-Dämmwirkung bei unebenem Untergrund der Gebäudewand,
bei dem ein Fassadenelement eine Dämmung mit einer 3-stufigen Schichtung aus einer äußeren Dämmplatte (12) aus hydrophober Kieselsäure und einer inneren Dämmplatte (14) aus hydrophober Kieselsäure aufweist, wobei zwischen diesen Platten (12, 14) eine Vakuum-Isolierplatte (13) gelagert ist, die aus hydrophober Kieselsäure besteht und die Vakuum-Isolierplatte (13) luftdicht mit Plastikfolie umhüllt und evakuiert wurde, wobei jedes Fassadenelement mittels mechanischen Verbindungselementen (11) auf dem bauseitigen Mauerwerk (18) befestigt ist,
das Fassadenelement einen Randverbund (9) in der Form eines Spezialdämmstoffes aufweist, und wobei die Vakuum-Isolierplatte (13) mit einem zusätzlichen umlaufenden Dichtstreifen aus diesem Material versehen ist, und
einer vorgehängten Fassade aus Sichtelementen (1), die mittels eines thermischen Trennelements (7) über Trägerpfosten (2) an der bauseitigen Wandfläche (18) befestigt sind,
**dadurch gekennzeichnet, dass**
die äußere Dämmplatte (12) aus hydrophober Kieselsäure hoher Dichte und die innere Dämmplatte (14) aus hydrophober Kieselsäure von niedrigerer Dichte als die äußere Dämmplatte (12) besteht, dass das Fassadenelement eine äußere Deckplatte (16) aus Metall zur Schalldämmung und eine Schicht (15) aus Glasfaserstoff-Gewebe zwischen der inneren Dämmplatte (14) und dem bauseitigen Mauerwerk (18) aufweist, und dass der Spezialdämmstoff des Randverbunds (9) auf der Basis von Erdalkalisilikat zur Verwendung in Brandschutzkonstruktionen ausgebildet ist.

2. Fassadensystem nach Anspruch 1, **dadurch gekennzeichnet, dass** der Feuchtegehalt der äußeren Dämmplatte (12) und der inneren Dämmplatte (14) mittels eines Systems aus Feuchtesensoren (20) beständig oder in zeitlichen Abständen überwacht wird.

3. Fassadensystem nach einem der Ansprüche 1 oder 2,
**dadurch gekennzeichnet,**
**dass** der Grad des Vakuums der Vakuum-Isolierplatte (13) mittels eines Systems aus Vakuum-Sensoren beständig oder in zeitlichen Abständen überwacht wird.

4. Fassadensystem nach einem der vorhergehenden Ansprüche,
**dadurch gekennzeichnet,**
**dass** im bestehenden Fassadensystem vorhandene Hohlräume, beispielsweise in den Trägerpfosten (2) und zwischen den einzelnen Fassadenelementen, mit hydrophober Kieselsäure und/oder mineralischem Dämmstoff verfüllt werden.

5. Verfahren zur Schaffung eines Fassadensystems zur Renovierung von Altbauten mit nicht brennbaren Fassadenelementen hoher Wärme-Dämmwirkung bei unebenem Untergrund der Gebäudewand,
bei dem ein bestehendes Fassadensystem zur Aufnahme eines verbesserten Fassadensystems dadurch vorbereitet wird, dass das Mauerwerk (18) soweit als möglich von Unebenheiten gereinigt wird, und
bei dem ein Fassadenelement bereit gestellt wird mit einer Dämmung bestehend aus einer 3-stufigen Schichtung aus einer äußeren Dämmplatte (12) aus hydrophober Kieselsäure und einer inneren Dämmplatte (14) aus hydrophober Kieselsäure, wobei zwischen diesen Platten (12, 14) eine Vakuum-Isolierplatte (13) gelagert ist, die aus hydrophober Kieselsäure besteht, die luftdicht mit Plastikfolie umhüllt und evakuiert wurde, und wobei die äußere Dämmplatte (14) mit einer äußeren Deckplatte (16) belegt und wobei das Fassadenelement ringsum mit einem Randverbund (9) versehen ist, und
bei dem das Fassadenelement am Mauerwerk (18) befestigt wird und mit einer Fassade aus Fassadenelementen (1) mittels Trägerpfosten (2) über thermische Trennelemente (7) am Mauerwerk (18) befestigt wird,
**dadurch gekennzeichnet, dass**
die innere Dämmplatte (14) zum Mauerwerk (18) hin mit einem Gewebe aus Glasfaser-Werkstoff versehen ist, und dass das Fassadenelement ringsum mit einem Randverbund (9) versehen ist, der im Wesentlichen aus Erdalkalisilikat besteht.

6. Verfahren nach Anspruch 5, **dadurch gekennzeichnet, dass** im bestehenden Fassadensystem vorhandene Hohlräume, beispielsweise in den Trägerpfosten (2) und zwischen den einzelnen Fassadenelementen, mit hydrophober Kieselsäure und/oder mineralischem Dämmstoff verfüllt werden

## Claims

1. Façade system for renovating old buildings with non-combustible façade elements of high thermal insulating action in the case of an uneven substrate of the building wall, in which a façade element has an insulation with a 3-stage layer system composed of an outer insulating panel (12) of hydrophobic silica and an inner insulating panel (14) of hydrophobic silica, wherein a vacuum insulating panel (13) is mounted between these panels (12, 14) and consists of hydrophobic silica, and the vacuum insulating panel (13) is encased airtight with plastic film and has been evacuated, wherein each façade element is fastened to the brickwork (18) of the building by means of mechanical connecting elements (11), the façade element has an edge connection (9) in the form of a special insulating material, and wherein the vacuum insulating panel (13) is provided with an additional peripheral sealing strip of this material, and with a curtain-type façade made up of visible elements (1) which are fastened to the wall surface (18) of the building by means of a thermal separating element (7) via support posts (2), **characterized in that** the outer insulating panel (12) consists of hydrophobic silica of high density and the inner insulating panel (14) consists of hydrophobic silica of lower density than the outer insulating panel (12), **in that** the façade element has an outer cover panel (16) of metal for sound insulation and a layer (15) of glass fibre material fabric between the inner insulating panel (14) and the brickwork (18) of the building, and **in that** the special insulating material of the edge connection (9) is formed on the basis of alkaline-earth metal silicate for use in fireproof constructions.

2. Façade system according to Claim 1, **characterized in that** the moisture content of the outer insulating panel (12) and of the inner insulating panel (14) is monitored constantly or at time intervals by means of a system of moisture sensors (20).

3. Façade system according to either of Claims 1 and 2, **characterized in that** the level of the vacuum of the vacuum insulating panel (13) is monitored constantly or at time intervals by means of a system of vacuum sensors.

4. Façade system according to one of the preceding claims, **characterized in that** cavities present in the existing façade system, for example in the support posts (2) and between the individual façade elements, are filled with hydrophobic silica and/or mineral insulating material.

5. Method for creating a façade system for renovating old buildings with non-combustible façade elements of high thermal insulating action in the case of an uneven substrate of the building wall, in which an existing façade system for receiving an improved façade system is prepared in that the brickwork (18) is cleared as far as possible from unevennesses, and in which a façade element is supplied having an insulation consisting of a 3-stage layer system composed of an outer insulating panel (12) of hydrophobic silica and an inner insulating panel (14) of hydrophobic silica, wherein a vacuum insulating panel (13) is mounted between these plates (12, 14) and consists of hydrophobic silica, is encased airtight with plastic film and has been evacuated, and wherein the outer insulating panel (14) is covered with an outer cover panel (16) and wherein the façade element is provided right around with an edge connection (9), and in which the façade element is fastened to the brickwork (18) and with a façade of façade elements (1) is fastened to the brickwork (18) by means of support posts (2) via thermal separating elements (7), **characterized in that** the inner insulating panel (14) is provided towards the brickwork (18) with a fabric of glass fibre material, and **in that** the façade element is provided right around with an edge connection (9) which consists substantially of alkaline-earth metal silicate.

6. Method according to Claim 5, **characterized in that** cavities present in the existing façade system, for example in the support posts (2) and between the individual façade elements, are filled with hydrophobic silica and/or mineral insulating material.

## Revendications

1. Système de façade pour la rénovation de bâtiments anciens avec des éléments de façade non combustibles ayant un effet d'isolation thermique élevé dans le cas d'un support inégal du mur du bâtiment, dans lequel un élément de façade présente une isolation avec une structure de couche à trois strates constituées d'une plaque d'isolation extérieure (12) en silice hydrophobe et d'une plaque d'isolation intérieure (14) en silice hydrophobe, une plaque d'isolation sous vide (13) étant placée entre ces plaques (12, 14), laquelle se compose de silice hydrophobe et la plaque d'isolation sous vide (13) étant enveloppée de manière étanche à l'air avec un film plastique et étant mise sous vide,
chaque élément de façade étant fixé au moyen d'éléments de connexion mécanique (11) à la maçonnerie du côté du bâtiment (18),
l'élément de façade présentant un assemblage des bords (9) sous la forme d'un matériau isolant spécial, et la plaque d'isolation sous vide (13) étant pourvue d'une bande d'étanchéité périphérique supplémentaire en ce matériau, et
une façade-rideau constituée d'éléments visibles (1) qui sont fixés au moyen d'un élément de séparation thermique (7) par le biais de poteaux de support (2) à la surface du mur (18) du côté du bâtiment,
**caractérisé en ce que**
la plaque d'isolation extérieure (12) se compose de silice hydrophobe de haute densité et la plaque d'isolation intérieure (14) se compose de silice hydrophobe de plus faible densité que la plaque d'isolation extérieure (12), l'élément de façade présente une plaque de recouvrement extérieure (16) en métal pour l'isolation sonore et une couche (15) en tissu renforcé par des fibres de verre entre la plaque d'isolation intérieure (14) et la maçonnerie du côté du bâtiment (18), et
le matériau isolant spécial de l'assemblage des bords (9) est réalisé à base de silicate alcalino-terreux pour l'utilisation dans des constructions ignifuges.

2. Système de façade selon la revendication 1, **caractérisé en ce que** le taux d'humidité de la plaque d'isolation extérieure (12) et de la plaque d'isolation intérieure (14) est contrôlé au moyen d'un système de capteurs d'humidité (20) de manière constante ou à intervalles temporels.

3. Système de façade selon l'une quelconque des revendications 1 et 2, **caractérisé en ce que** le degré de vide de la plaque d'isolation sous vide (13) est contrôlé au moyen d'un système de capteurs de vide de manière continue ou à intervalles temporels.

4. Système de façade selon l'une quelconque des revendications précédentes, **caractérisé en ce que** des cavités prévues dans le système de façade existant, par exemple dans les poteaux de support (2) et entre les éléments de façade individuels, sont remplies de silice hydrophobe et/ou de matériau isolant minéral.

5. Procédé pour fabriquer un système de façade pour la rénovation de bâtiments anciens avec des éléments de façade non combustibles ayant un effet d'isolation thermique élevé dans le cas d'un support inégal du mur du bâtiment, dans lequel un système de façade existant est prévu pour recevoir un système de façade amélioré par le fait que la maçonnerie (18) est nettoyée de ses impuretés dans la mesure du possible, et dans lequel un élément de façade est déjà fourni avec une isolation constituée d'un système de couches à trois strates constituées d'une plaque d'isolation extérieure (12) en silice hydrophobe et d'une plaque d'isolation intérieure (14) en silice hydrophobe, une plaque d'isolation sous vide (13) étant placée entre ces plaques (12, 14), laquelle se compose de silice hydrophobe, qui est enveloppée de manière étanche à l'air avec un film de plastique et qui est mise sous vide, et la plaque d'isolation extérieure (14) étant recouverte d'une plaque de recouvrement extérieure (16), l'élément de façade étant pourvu tout autour d'un assemblage des bords (9), et
dans lequel l'élément de façade est fixé à la maçonnerie (18) et est fixé à une façade constituée d'éléments de façade (1) au moyen de poteaux de support (2) par le biais d'éléments de séparation thermique (7) sur la maçonnerie (18), **caractérisé en ce que** la plaque d'isolation intérieure (14) est pourvue vers la maçonnerie (18) d'un tissu en matériau renforcé par des fibres de verre, et
l'élément de façade est pourvu tout autour d'un assemblage des bords (9) qui se compose essentiellement de silicate alcalino-terreux.

6. Procédé selon la revendication 5, **caractérisé en ce que** des cavités prévues dans le système de façade existant, par exemple dans les poteaux de support (2) et entre les éléments de façade individuels, sont remplies de silice hydrophobe et/ou de matériau isolant minéral.
